# EUROPÄISCHE PATENTANMELDUNG

(11) **EP 1 130 908 A2**
(43) Veröffentlichungstag der Anmeldung: **05.09.2001**
(21) Anmeldenummer: 01104080.5
(22) Anmeldetag: 21.02.2001
(51) Int. Cl.: H04N 5/44

(54) **Verfahren zum Identifizieren gleicher Fernseh- und Videobilder**

(30) Priorität: 28.02.2000 DE 10009327
(71) Anmelder: XSYS Interactive Research GmbH, 78050 Villingen-Schwenningen (DE)
(72) Erfinder: Link, Hermann, 78166 Donaueschingen (DE)
(74) Vertreter: Patentanwälte Westphal, Mussgnug & Partner

(57) **Zusammenfassung**

Um Fernseh- oder Videobilder (V1, V2) als gleich identifizieren zu können, werden vorgebbare Parameter (H1, H2) der zu prüfenden Bilder (V1, V2) miteinander verglichen. Bilder, deren Parameter, vorzugsweise die mittlere Helligkeit (H1, H2), innerhalb eines vorgebbaren Toleranzbereiches gleich sind, werden als gleiche Bilder identifiziert. So werden z. B. in einer Fernsehempfangsanlage, insbesondere einer mobilen, die Bilder aller empfangbaren Sender auf Gleichheit geprüft. Als gleich identifizierte Bilder werden gleichen Sendern bzw. gleichen Programmen zugeordnet, deren Kanäle als alternative Kanäle gespeichert werden. Bei schlechter Empfangs- oder Bildqualität wird auf einen alternativen Kanal umgeschaltet.

## Beschreibung

Die Erfindung betrifft ein Verfahren zum Identifizieren gleicher Fernseh- oder Videobilder.

Um festzustellen, ob zwei Fernseh- oder Videobilder gleich sind, ist eine Person erforderlich, die durch Augenscheinnahme entscheidet, ob die beiden Bilder gleich sind. In vielen Fällen kann es aber zweckmäßig sein, die Feststellung, ob zwei Fernseh- oder Videobilder gleich sind, anstatt von einer Person treffen zu lassen, mit technischen Mitteln durchzuführen.

Es ist daher Aufgabe der Erfindung, ein Verfahren zum Identifizieren gleicher Fernseh- oder Videobilder anzugeben.

Die Erfindung, ein Verfahren zum Identifizieren gleicher Fernseh- oder Videobilder löst diese Aufgabe gemäß Anspruch 1 dadurch, daß vorgebbare Parameter der zu identifizierenden Fernseh- oder Videobilder miteinander verglichen werden und daß Bilder, deren Parameter innerhalb eines vorggebbaren Toleranzbereiches gleich sind, als gleiche Bilder identifiziert werden.

Das erfindungsgemäße Verfahren sieht vor, vorgebbare Parameter der auf Gleichheit zu prüfenden Fernseh- oder Videobilder zu messen und miteinander zu vergleichen. Um zwei Fernseh- oder Videobilder als gleich identifizieren zu können, müssen die Parameter nicht vollkommen gleich sein, was in der Realität sowieso nie vorkommt, sondern innerhalb eines vorgebbaren Toleranzbereiches übereinstimmen.

Als Parameter zum Prüfen von Fernseh- oder Videobildern eignet sich besonders gut die mittlere Helligkeit der Bilder.

Eine Ausgestaltung des erfindungsgemäßen Verfahrens sieht daher vor, den Mittelwert der Helligkeit der auf Identität zu prüfenden Fernseh- oder Videobilder zu bestimmen. Die ermittelten oder gemessenen Mittelwerte werden miteinander verglichen. Fernseh- oder Videobilder mit Mittelwerten der Helligkeit, die innerhalb eines vorgebbaren Toleranzbereiches gleich sind, werden als gleiche Fernseh- oder Videobilder identifiziert.

Es kann z. B. der Mittelwert der Helligkeit des gesamten Bildes ermittelt werden. Die Bilder können aber auch in mehrere Abschnitte, z. B. in Zeilen oder Spalten aufgeteilt sein. Für jede Zeile oder Spalte eines Bildes wird der Mittelwert der Helligkeit ermittelt. Die Mittelwerte gleicher Zeilen oder Spalten der einzelnen auf Identität zu prüfenden Fernseh- oder Videobilder werden miteinander verglichen. Wenn die Mittelwerte der Helligkeit der Zeilen oder Spalten innerhalb des vorgebbaren Toleranzbereiches übereinstimmen, werden die Fernseh- oder Videobilder als gleich identifiziert.

Es kann auch zugelassen werden, daß die Mittelwerte der Helligkeit einer vorgebbaren Anzahl von Zeilen oder Spalten zweier Bilder außerhalb des Toleranzbereiches liegen. Wenn z. B. die Helligkeit bei 90% der Zeilen oder Spalten im angegebenen Toleranzbereich noch gleich ist, werden die Bilder als gleich identifiziert.

Die Aufteilung der Bilder in Abschnitte ist beliebig. Sie können z. B. in Quadrate oder einen zentralen und einen Randbereich aufgeteilt sein.

Es ist vorteilhaft, den Toleranzbereich nicht konstant zu wählen, sondern in Abhängigkeit vom Mittelwert der Helligkeit im gleichen Sinn zu verändern, wie sich der Mittelwert ändert. Durch diese Maßnahme wird die Treffsicherheit des erfindungsgemäßen Verfahrens erhöht. Hierzu kann z. B. der gesamte Mittelwertbereich vom kleinsten bis zum größten vorkommenden Mittelwert in einzelne Abschnitte aufgeteilt sein. Jedem Abschnitt ist ein Toleranzbereich zugeordnet. Die den einzelnen Abschnitten zugeordneten Toleranzbereiche können z. B. in einer sog. Look-up-Tabelle gespeichert sein.

Es ist ferner zweckmäßig, den Toleranzbereich in Abhängigkeit der Helligkeitsunterschiede innerhalb eines Bildes einzustellen. Für ein Bild mit größeren Kontrasten kann der Toleranzbereich größer gewählt werden als für ein weniger kontrastreiches Bild. Ebenso wie bei der Helligkeit kann der gesamte Bereich der Kontrastwerte vom kleinsten bis zum größten vorkommenden Wert in Abschnitte aufgeteilt sein, wobei jedem Abschnitt ein Toleranzbereich zugeordnet ist. Die Zuordnung zwischen den Kontrastwerten und den Toleranzbereichen kann z. B. ebenfalls in einer Look-up-Tabelle gespeichert sein.

Anhand der Figuren wird das erfindungsgemäße Verfahren im Folgenden näher erläutert. In der Zeichnung zeigen:
- Fig. 1: die Helligkeitswerte zweier als gleich identifizierter Bilder und
- Fig. 2: die Helligkeitswerte zweier als nicht gleich identifizierter Bilder.

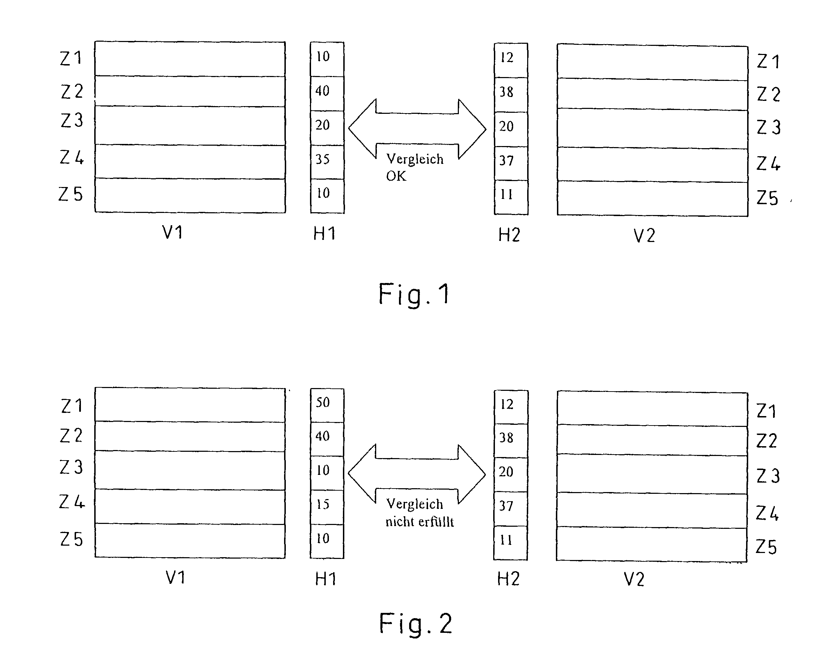

In den Fig. 1 und 2 sind je zwei Fernseh- oder Videobilder V1 und V2 abgebildet, die in jeweils fünf Zeilen Z1 bis Z5 aufgeteilt sind. Für jede Zeile jedes Bildes wird die mittlere Helligkeit H1 bzw. H2 ermittelt.

Bei den beiden in der Fig. 1 gezeigten Bildern V1 und V2 liegen die mittleren Helligkeitswerte H1 gleicher Zeilen im vorgegebenen Toleranzbereich; die beiden Bilder V1 und V2 werden daher als gleich identifiziert.

Dagegen liegen die mittleren Helligkeitswerte H2 einzelner Zeilen der in Fig. 2 dargestellten Bilder V1 und V2 nicht mehr im vorgegebenen Toleranzbereich. Die mittleren Helligkeitswerte der Zeilen Z1, Z3 und Z4 unterscheiden sich so stark, daß sie nicht mehr im vorgegebenen Toleranzbereich liegen, der z. B. zu +/- 5% gewählt sein kann. Bei einem Toleranzbereich von +/- 5% muß der mittlere Helligkeitswert H1 des einen Bildes im Bereich H2 +/- 5% liegen, wenn H2 der mittlere Helligkeitswert des anderen Bildes ist. Andernfalls werden die beiden Bilder als nicht gleich identifiziert.

Besonders vorteilhaft läßt sich das erfindungsgemäße Verfahren in einer mobilen Fernsehempfangsanlage einsetzen.

Der Empfang und die Wiedergabe von Fernsehbildern in ortsfesten Empfangsstationen bereitet kaum Schwierigkeiten, weil die Empfangsverhältnisse gut sind und weitgehend konstant bleiben. Dagegen können die Empfangsverhältnisse bei einer mobilen Empfangsstation je nach Beschaffenheit des Geländes erheblich schwanken. Befindet sich die mobile Empfangsstation z. B. in einer bergigen Landschaft, können Echos den Empfang erheblich stören; im Funkschatten von Bergen oder Hügeln kann die Funkverbindung sogar vollständig zusammenbrechen, so dass an Stelle eines Fernsehbildes nur noch Rauschen auf dem Bildschirm zu sehen ist.

Inzwischen werden Kraftfahrzeuge, wie z. B. PKW und Reisebusse, aber auch Eisenbahnfahrzeuge, mit Fernsehempfängern und Bildschirmen ausgerüstet, um einerseits Nachrichten, beispielsweise über Videotext übermittelte Verkehrsmeldungen, anzuzeigen oder andererseits die reisenden mit Fernsehprogrammen unterhalten zu können. Auf Grund der in Folge des gerade befahrenen Geländes unter Umständen erheblich schwankenden Empfangsverhältnisse in einer sich bewegenden Empfangsstation werden die Augen der reisenden Fernsehzuschauer in unangenehmer Weise stark beansprucht, weil die Bildqualität in erheblichem Maße schwanken kann.

Durchfährt das Fahrzeug z. B. einen Funkschatten, so sieht der Betrachter nur noch Rauschen auf dem Bildschirm. Das Betrachten eines Fernsehprogramms mit derartigen Störungen führt eher zur Ermüdung der Zuschauer als daß es deren Unterhaltung dient.

Eine Ausgestaltung der Erfindung sieht daher vor, in einer Fernsehempfangsanlage, insbesondere in einer mobilen, die Fernsehbilder aller empfangbaren Fernsehsender bzw. Fernsehprogramme nach dem erfindungsgemäßen Verfahren auf Gleichheit zu prüfen.

Die Kanäle, auf denen als gleich identifizierte Fernsehbilder empfangen werden, werden als alternative Kanäle in einem Speicher gespeichert. Sinkt die Qualität der vom eingestellten Fernsehsender gelieferten Fernsehbilder z. B. unter ein vorgebbares Qualitätsniveau, so wird die Fernsehempfangsanlage auf einen der alternativen Kanäle eingestellt. Liefert auch dieser Kanal Fernsehbilder unzureichender Qualität, so wird so lange auf einen anderen alternativen Kanal umgeschaltet, bis ein Kanal gefunden ist, auf dem Fernsehbilder ausreichender Qualität empfangen werden. Die Qualität der empfangenen Fernsehbilder kann z. B. gemäß dem in der internationalen Anmeldung WO 99/17557 beschriebenen Verfahren ermittelt werden.

Wenn die mittlere Helligkeit unter einem vorgebbaren Schwellwert liegt, ist es sinnvoll, keine Vergleiche mehr durchzuführen, weil dann keine signifikanten Unterschiede mehr meßbar sind.

Das erfindungsgemäße Verfahren läßt sich besonders vorteilhaft in einer mobilen Fernsehempfangsanlage einsetzen, um von den empfangbaren Fernsehsendern den besten auszusuchen, ist jedoch keineswegs auf diesen Einsatzbereich beschränkt. Beispielsweise ermöglicht das erfindungsgemäße Verfahren es, aus einer Vielzahl von Fernseh- oder Videobildern diejenigen herauszufinden, welche gleich sind und daher zum gleichen Sender oder gleichen Fernsehprogramm gehören.

### Bezugszeichenliste

H1, H2 mittlere Helligkeit
V1, V2 Fernseh-, Videobild
Z1-Z5 Zeile

## Patentansprüche

1. Verfahren zum Identifizieren gleicher Fernseh- oder Videobilder (V1, V2), **dadurch gekennzeichnet,** daß vorgebbare Parameter (H1, H2) der zu prüfenden Fernseh- oder Videobilder (V1, V2) miteinander verglichen werden und daß Bilder (V1, V2), deren Parameter (H1, H2) innerhalb eines vorgebbaren Toleranzbereiches gleich sind, als gleiche Bilder (V1, V2) identifiziert werden.

2. Verfahren nach Anspruch 1, **dadurch gekennzeichnet,** daß die Fernseh- oder Videobilder (V1, V2) oder deren vorgebbare Paramter (H1, H2) in einem Speicher zwischengespeichert werden.

3. Verfahren nach Anspruch 1 oder 2, **dadurch gekennzeichnet,** daß der Mittelwert der Helligkeit (H1, H2) eines Fernseh- oder Videobildes (V1, V2) als Parameter ermittelt wird.

4. Verfahren nach Anspruch 3, **dadurch gekennzeichnet,** daß die Mittelwerte der Helligkeit (H1, H2) vorgebbarer Abschnitte (Z1-Z5) des Fernseh- oder Videobildes (V1, V2) als Parameter ermittelt werden.

5. Verfahren nach Anspruch 4, **dadurch gekennzeichnet,** daß die Abschnitte Zeilen (Z1-Z5) oder Spalten vorgebbarer Höhe bzw. Breite sind.

6. Verfahren nach Anspruch 4, **dadurch gekennzeichnet,** daß die Abschnitte Quadrate sind.

7. Verfahren nach Anspruch 4, **dadurch gekennzeichnet,** daß der Mittelwert der Helligkeit im zentralen Bereich des Fernseh- oder Videobildes (V1, V2) ermittelt wird.

8. Verfahren nach Anspruch 4 oder 7, **dadurch gekennzeichnet,** daß der Mittelwert der Helligkeit des Randbereiches des Fernseh- oder Videobildes (V1, V2) ermittelt wird.

9. Verfahren nach einem Ansprüche 3 bis 8, **dadurch gekennzeichnet,** daß der Toleranzbereich in Abhängigkeit vom Mittelwert der Helligkeit eingestellt wird.

10. Verfahren nach einem der Ansprüche 3 bis 9, **dadurch gekennzeichnet,** daß der Toleranzbereich in Abhängigkeit der Helligkeitsunterschiede auf einem Fernseh- oder Videobild eingestellt wird.

11. Verfahren nach Anspruch 9 oder 10, **dadurch gekennzeichnet,** daß der Toleranzbereich im gleichen Sinne verändert wird, wie sich der Mittelwert der Helligkeit ändert oder wie sich die Helligkeitsunterschiede ändern.

12. Verfahren nach einem der Ansprüche 3 bis 11, **dadurch gekennzeichnet,** daß keine Vergleiche durchgeführt werden, wenn der Mittelwert der Helligkeit unter einem vorgebbaren Schwellwert liegt oder wenn kein Helligkeitsunterschied detektiert wird.

13. Verfahren nach einem der Ansprüche 1 bis 12, **dadurch gekennzeichnet,** daß in einer Fernsehempfangsanlage die vorgebbaren Parameter von Fernsehbildern miteinander verglichen werden, die von Fernsehsendern auf unterschiedlichen Kanälen ausgestrahlt werden, und daß als gleich identifizierte Fernsehbilder gleichen Sendern oder das gleiche Programm ausstrahlenden Sendern zugeordnet werden.

14. Verfahren nach Anspruch 13, **dadurch gekennzeichnet,** daß mehrere Fernsehbilder jeden Kanals oder deren vorgebbare Parameter in einem Speicher gespeichert werden und daß die Parameter miteinander verglichen werden.

15. Verfahren nach Anspruch 13 oder 14, **dadurch gekennzeichnet,** daß die Kanäle der als gleich identifizierten oder das gleiche Programm ausstrahlenden Sender als alternative Empfangskanäle in einem Speicher gespeichert werden.

16. Verfahren nach Anspruch 15, **dadurch gekennzeichnet,** daß bei Empfangsstörungen oder bei beeinträchtigter Qualität des Fernsehbildes die Fernsehempfangsanlage auf einen der gespeicherten alternativen Empfangskanäle abgestimmt wird.
